# EUROPÄISCHE PATENTSCHRIFT

(11) **EP 0 961 883 B1**
(45) Veröffentlichungstag und Bekanntmachung des Hinweises auf die Patenterteilung: **12.12.2001**
(21) Anmeldenummer: 98908092.4
(22) Anmeldetag: 13.02.1998
(51) Int. Cl.: F15B 1/08, B60T 8/40

(54) **DRUCKMITTELSPEICHER**
PRESSURE ACCUMULATOR
ACCUMULATEUR DE PRESSION

(30) Priorität: 19.02.1997 DE 19706427
(43) Veröffentlichungstag der Anmeldung: 08.12.1999
(73) Patentinhaber: Continental Teves AG & Co. oHG, 60488 Frankfurt (DE)
(72) Erfinder: RÜFFER, Manfred, D-65843 Sulzbach (DE); MUTSCHLER, Robert, D-71101 Schöneich (DE)
(86) Internationale Anmeldenummer: EP9800808
(87) Internationale Veröffentlichungsnummer: WO9837329

(56) Entgegenhaltungen:
- DE-A- 1 922 070
- DE-A- 2 023 637
- DE-A- 4 240 065
- FR-A- 1 454 067
- "BESPOKE STEPPER BEATS THE HEAT WITH MAGNETIC FIELD INTACT" EUREKA (INC. ENGINEERING MATERIALS AND DESIGN), Bd. 11, Nr. 4, 1.April 1991, Seite 9 XP000241921
- PATENT ABSTRACTS OF JAPAN vol. 007, no. 001 (M-183), 6.Januar 1983 & JP 57 160751 A (NIPPON AIR BRAKE KK), 4.Oktober 1982,
- PATENT ABSTRACTS OF JAPAN vol. 006, no. 267 (M-182), 25.Dezember 1982 & JP 57 158154 A (NIPPON AIR BRAKE KK), 29.September 1982,

## Beschreibung

Die Erfindung betrifft einen Druckmittelspeicher, insbesondere für schlupfgeregelte Kraftfahrzeugbremsanlagen nach dem Oberbegriff des Patentanspruchs 1.

Hydrospeicher weisen in der Regel elastomere Dichtelemente auf, wobei durch eine Bauart des Druckmittelspeichers als Kolbenspeicher (vgl. hierzu DE 41 41 929 A1) oder als Membranspeicher (vgl. hierzu DE 41 31 524 A1) in Abhängigkeit des Partialdrucks das im Druckmittelspeicher häufig unter hohem Druck stehende Gas über die Dichtung bzw. Membran in die Bremsflüssigkeit defundiert. Daher muß bei diesen Druckmittelspeichern das Gasvolumen entsprechend an die zu erwartenden Diffusion angepaßt werden. Daher ist es gerade bei Verwendung eines solchen Druckmittelspeichers für Kraftfahrzeugbremsanlagen notwendig, daß das Gas wieder aus der Bremsflüssigkeit entweichen kann, um eine Betriebsstörung der Bremse zu verhindern.

Die DE-A-2 023 637 offenbart einen Druckmittelspeicher mit einem in das Gehäuse des Druckmittelspeichers einmündenden Einlauf- und Auslaufstutzen für eine Heizölversorgungsanlage, wobei am Einlaufstutzen eine Pumpe angeschlossen ist, die in eine Kammer des Druckmittelspeichers fördert. Die Pumpenförderung wird unterbrochen, sobald über einen die Kammer begrenzender Faltenbalg ein Schaltstift betätigt wird, der mit einer Pumpen-Schalteinrichtung verbunden ist.

Aus der gattungsbildenden DE-A-1 922 070 ist bereits ein Druckmittelspeicher bekannt geworden, dessen Faltenbalg mit einem Ventilelement versehen ist, welches bei unbeaufschlagtem Hydrospeicher einen in das Gehäuse des Speichers einmündenden Flüssigkeitsanschluß verschlossen hält. Auf der vom Flüssigkeitsanschluß abgewandten Stirnseite des Ventilelementes ist ein sich in den Faltenbalg erstreckender Zylinder angebracht, der teleskopartig an einem gehäusefesten Zylinder den Faltenbalg und das Ventilelement konzentrisch zum Flüssigkeitsanschluß im Gehäuse führt. Die exakte Ausrichtung des mit dem Faltenbalg zusammenwirkenden Ventilelementes im Gehäuse wird demnach durch die Teleskopanordnung der beiden Zylinder innerhalb des Faltenbalgs bewirkt. Der Druckmittelspeicher ist hinsichtlich seines Speicherverhaltens nicht veränderbar.

Daher ist es die Aufgabe der Erfindung, einen Druckmittelspeicher der eingangs genannten Art mit einfachen, kostengünstigen und funktionssicheren Mitteln zu entwickeln, bei dem eine Anpassung des Speicherverhaltens an verschiedene Druckarbeitpunkte möglich ist.

Diese Aufgabe wird erfindungsgemäß durch die kennzeichnenden Merkmale des Patentanspruchs 1 gelöst.

Weitere Merkmale, Vorteile und Anwendungsmöglichkeiten der Erfindung gehen im Nachfolgenden aus den Unteransprüchen und aus der Beschreibung eines konstruktiven Ausführungsbeispie les hervor, dessen Wirkungsweise anhand eines Diagramms verdeutlicht wird.

Es zeigen somit:
- Fig. 1: einen Längsschnitt durch eine vorteilhafte Ausführungsform des Erfindungsgegenstandes,
- Fig. 2: den charakteristischen Kennlinienverlauf des Erfindungsgegenstandes.

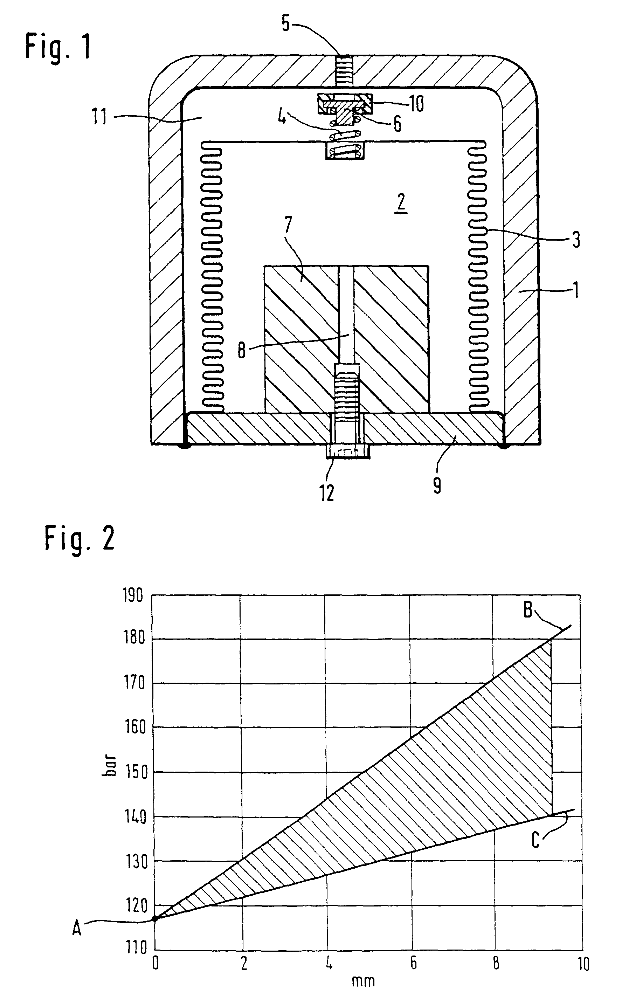

Die Fig. 1 zeigt in erheblich vergrößertem Maßstab skizziert einen Druckmittelspeicher, der insbesondere für schlupfgeregelte Kraftfahrzeugbremsanlagen verwendet werden kann. Hierzu weist das topfförmige Gehäuse 1 einen mit der Bremsanlage in Verbindung bringbaren Druckmittelanschluß 5 auf. Erfindungsgemäß befindet sich in dem Druckmittelspeicher ein im Gehäuse 1 befestigter Faltenbalg 3, der eine Kammer 2 umschließt, die mit einem in der Regel unter hohem Druck stehenden Gas befüllt ist. Damit das Gas nicht über die Wandung des Faltenbalges 3 aus seiner Kammer 2 in eine außerhalb des Faltenbalges 3 gelegene, über den Druckmittelanschluß 5 mit der Bremsanlage in Verbindung stehende Kammer 11 gelangen kann, wird bei der Gestaltung des Faltenbalges 3 bewußt auf elastomere Bauelemente verzichtet und dementsprechend erfindungsgemäß ausschließlich Metall für die Herstellung des Faltenbalges 3 verwendet. An der Stirnfläche des topfförmigen Faltenbalges 3 ist ein Federelement 4 befestigt, das ein dem Druckmittelanschluß 5 zugewandtes Ventilelement 6 trägt. Ferner befindet sich innerhalb des Faltenbalges 3 ein vorzugsweise aus Kunststoff bestehender Innenkörper 7, dessen Dimensionierung die Druckaufnahmecharakteristik des Druckmittelspeichers bestimmt und gleichzeitig als Anschlag für die Stirnfläche des Faltenbalges 3 genutzt werden kann. Der topfförmige Faltenbalg 3 ist mit seinem offenen Endbereich zwischen dem topfförmigen Gehäuse 1 und dem als Deckel ausgebildeten Verschlußelement 9 eingespannt sowie gleichzeitig dazwischen abgedichtet. Durch das deckelförmige Verschlußelement 9 erstreckt sich ein kanalförmiger Füllanschluß 8, der vorzugsweise durch den das Speicherverhalten charakterisierenden Innenkörper 7 in die vom Faltenbalg 3 umschlossene Kammer 2 einmündet. Abbildungsgemäß ist dieser für das Gas vorgesehene Füllanschluß 8 mittels einer Dichtschraube 12 verschlossen, die gleichzeitig den zylinderförmigen Innenkörper 7 am deckelförmigen Verschlußelement 9 teilweise durchdringt. Sowohl das Gehäuse 1 als auch der Faltenbalg 3 sind vorzugsweise durch ein Tiefziehverfahren zu der abbildungsgemäßen Topfform ausgestaltet, wobei bezüglich der Mantelfläche des Faltenbalges 3 die Wellenkontur zur Herstellung des Balgs mittels eines Formpreßverfahrens zustande kommt. Das am Federelement 4 befestigte Ventilelement 6 ist vorzugsweise mit einem vulkanisierten Dichtelement 10 versehen, wodurch sich eine besonders einfache und sichere Abdichtung der Kammer 11 gegenüber dem Druckmittelanschluß 5 im Gehäuse 1 ergibt.

Somit lassen sich in einer Zusammenschau nachfolgende Vorteile verdeutlichen:
Das Verschlußelement 9 verbindet das Gehäuse 1 und den Faltenbalg 3 zu einer stabilen, einfach herzustellenden Einheit.

Das vorzugsweise als Tiefziehteil hergestellte topfförmige Gehäuse 1 kann im Bereich des Druckmittelanschlusses 5, der am Topfboden gelegen ist, relativ leicht mit einem Anschlußgewinde (Innen-/oder Außengewinde) versehen werden, wobei sich der Druckmittelspeicher auch als Einschraub- bzw. Anschraubspeicher an das angeschlossene System eignet.

Der Füllanschluß 8 bildet im Hinblick auf seine Konstruktion einen Standard- als auch Serienteil, insbesondere in der gezeigten Ausführungsform.

Das als Sitzventil ausgeführte Ventilelement 6 weist einen Flachsitz auf, wodurch sich eine genaue Zentrierung gegenüber dem Druckmittelanschluß 5 erübrigt. Das eventuell anvulkanisierte Dichtelement 10 gewährleistet bei erhöhten Anpreßdrücken des Ventilelementes 6 auf die Gehäusebohrung des Druckmittelanschlusses 5 eine günstige, sich verstärkende Dichtwirkung.

Das Federelement 4 sorgt zweckmäßigerweise für eine Entkoppelung des Faltenbalges 3 vom Druckmittelanschluß 5, wodurch etwaige Konzentrizitätstoleranzen des Faltenbalges 3 ausgeglichen und toleriert werden können. Weiterhin bietet diese Federelement 4 eine Sicherheitsfunktion für das Ventilelement 6, wenn sich infolge einer Druckmittelleckage in der Kammer 11 der Faltenbalg 3 soweit ausdehnen kann, bis das Ventilelement 6 und der Faltenbalg 3-infolge des zusammengedrückten Federelementes 4-direkt aufeinander einwirken. Durch das Flächenübersetzungsverhältnis des Balgquerschnittes zum Auslaßquerschnitt am Druckmittelanschluß 5 ergibt sich entsprechend dem Gasinnendruck in der Kammer 2 ein sicheres Schließen des Ventilelementes 6, womit eine weitere Druckmittelleckage verhindert ist.

### Funktionsmerkmale:

Aufgrund der im Druckmittelspeicher maximal zulässigen und damit begrenzten Drucküberhöhung, muß für die Konstruktion des Faltenbalges 3 gewährleistet werden, daß der Flüssigkeitsdruck in der Kammer 11 immer größer als der Gasdruck in der Kammer 2 ist, damit außerhalb des Faltenbalges 3 die zulässige Drucküberhöhung eingehalten wird. Da dieser maximal zulässige Außenüberdruck bei einem einlagigen Faltenbalg bei ca. 40 bar liegt, wird der Druckmittelspeicher gleichzeitig sowohl über den Füllanschluß 8 mit Gas als auch über den Druckmittelanschluß 5 mit Druckmittel bzw. Bremsflüssigkeit befüllt. Damit ergibt sich der im Diagramm nach Fig. 2 dargelegte untere Druckarbeitspunkt A.

Bei einem geringfügig über den Außenüberdruck erhöhten Gasdruck im Faltenbalg 3 verschließt das Ventilelement 6 den Druckmittelanschluß 5. Je stärker der Druck der Bremsflüssigkeit in der Kammer 11 bzw. am Druckmittelanschluß 5 des Bremssystems abfällt, umso stärker ist die Dichtwirkung des Ventilelementes 6 am Ventilsitz (Druckmittelanschluß 5) aufgrund der erhöhten Flächenpressung.

Das Diagramm nach Fig. 2 veranschaulicht den Kennlinienverlauf in Abhängigkeit der Druckänderung im Druckspeicher über den Federweg des Faltenbalges 3. Hierbei entspricht die obere Kennlinie B der Druckänderung der Bremsflüssigkeit, die untere Kennlinie C gibt die Druckänderung des Gases in Abhängigkeit des Federweges des Faltenbalges 3 an. Entsprechend dem Auslegungskriterium ergibt sich somit für den vorgestellten Druckmittelspeicher bei maximalem Hub des Faltenbalges die voran bezeichnete Drucküberhöhung als zulässiger Differenzdruck von 40 bar.

Bei Wunsch oder Bedarf kann auf eine Gasbefüllung des Faltenbalges 3 verzichtet werden. Die Federsteifigkeit des Metallbalges und dessen Festigkeit erlauben dann die Darstellung eines sog. Mitteldruckspeichers anstelle des aus dem Diagramm nach Fig. 2 dargestellten Hochdruckspeichers. Beim Einsatz des Erfindungsgegenstandes als Mitteldruckspeicher können folglich der Füllanschluß 8, der Innenkörper 7, das Ventilelement 6 und das Federelement 5 entfallen.

Unabhängig davon, ob nunmehr der Erfindungsgegenstand als Hochdruck- oder Mitteldruckspeicher verwendet wird, ergeben sich für den Erfindungsgegenstand technische Vorteile, die sich insbesondere durch die absolute Gasdichtheit, Wartungsfreiheit, Anpassung des Speicherverhaltens an verschiedene Druckarbeitspunkte mittels des Innenkörpers 7 auszeichnen. Weitere Vorteile sind in der verschleißfreien Betriebsweise und einfachen Konstruktion zu sehen, wobei insbesondere durch einen extrem hohen Berstdruck des Faltenbalges 3, der etwa beim 10fachen des zulässigen Überdrucks liegt, extrem hohe Sicherheitsreserven vorliegen. Ferner sind die produktionstechnischen Vorteile zu erwähnen, die darin gesehen werden können, daß keine Präzisionsteile und keine feinbearbeiteten Oberflächen notwendig sind. Die Abdichtung des Faltenbalges 3 zwischen dem Gehäuse 1 und dem deckelförmigen Verschlußelement 9 kann überdies automatengerecht mittels einer Schweißnaht geschehen.

### Bezugszeichenliste

- 1: Gehäuse
- 2: Kammer
- 3: Faltenbalg
- 4: Federelement
- 5: Druckmittelanschluß
- 6: Ventilelement
- 7: Innenkörper
- 8: Füllanschluß
- 9: Verschlußelement
- 10: Dichtelement
- 11: Kammer
- 12: Dichtschraube

## Patentansprüche

1. Druckmittelspeicher, insbesondere für schlupfgeregelte Kraftfahrzeugbremsanlagen, mit einem einen Druckmittelanschluß (5) aufweisenden Gehäuse (1), mit einem Ventilelement (6), das den Druckmittelanschluß (5) öffnet oder verschließt, , mit einem im Gehäuse (1) beweglich angeordneten, mindestens zwei Kammern (2, 11) im Druckmittelspeicher voneinander trennenden Körper, der als im Gehäuse (1) beweglicher, die eine Kammer (2) umschließender Faltenbalg (3) ausgebildet ist, wobei die vom Faltenbalg (3) umschlossene Kammer (2) mit einem Gas befüllt ist, **dadurch gekennzeichnet, daß** im Faltenbalg (3) ein vorzugsweise aus Kunststoff bestehender Innenkörper (7) positioniert ist, durch dessen Dimensionierung die Druckaufnahmecharakteristik des Druckmittelspeichers bestimmt ist.

2. Druckmittelspeicher nach Anspruch 1, **dadurch gekennzeichnet, daß** an der Stirnfläche des Faltenbalges (3) ein Federelement (4) befestigt ist, das ein dem Druckmittelanschluß (5) zugewandtes Ventilelement (6) trägt.

3. Druckmittelspeicher nach Anspruch 1 oder 2, **dadurch gekennzeichnet, daß** der Faltenbalg (3) aus einem Metall besteht.

4. Druckmittelspeicher nach Anspruch 1, **dadurch gekennzeichnet, daß** der Faltenbalg (3) einen Füllanschluß (8) aufnimmt, der vorzugsweise durch den das Speicherverhalten charakterisierenden Innenkörper (7) in die eine, vom Faltenbalg (3) umschlossene Kammer (2) einmündet.

5. Druckmittelspeicher nach Anspruch 1, **dadurch gekennzeichnet, daß** der Faltenbalg (3) mit seinem offenen Endbereich zwischen dem Gehäuse (1) und einem als Deckel ausgebildeten Verschlußelement (9) befestigt sowie abgedichtet ist.

6. Druckmittelspeicher nach Anspruch 1, **dadurch gekennzeichnet, daß** das Gehäuse (1) als Tiefziehteil ausgebildet ist.

7. Druckmittelspeicher nach Anspruch 1, **dadurch gekennzeichnet, daß** das Ventilelement (6) als Sitzventil wirksam ist, das mit einem Dichtelement (10) versehen ist.

8. Druckmittelspeicher nach einem der vorhergehenden Ansprüche 1 bis 5, **dadurch gekennzeichnet, daß** der Faltenbalg (3) durch ein Tiefziehverfahren zu einer Topfform ausgestaltet ist, dessen Mantelfläche vorzugsweise durch Formpressen die Wellenkontur eines Faltenbalges (3) aufweist.

## Claims

1. Pressure fluid accumulator, more particularly for slip-controlled automotive vehicle brake systems, which includes a housing (1) with a pressure fluid port (5), a valve element (6) which opens or closes the pressure fluid port (5), a body which is movably arranged in the housing (1) and isolates at least two chambers (2, 11) in the pressure fluid accumulator from one another, the said body being configured as a pleated bellows (3) which is movable in the housing (1) and encloses the one chamber (2), the said chamber (2) enclosed by the pleated bellows (3) being filled with a gas,
**characterized in that** an inner body (7) which is preferably made of plastics is positioned in the pleated bellows (3), and the pressure absorption characteristics of the pressure fluid accumulator is determined by the dimensioning of the said inner body.

2. Pressure fluid accumulator as claimed in claim 1,
**characterized in that** a spring element (4) is attached to the end surface of the pleated bellows (3) and carries a valve element (6) which faces the pressure fluid port (5).

3. Pressure fluid accumulator as claimed in claim 1 or 2,
**characterized in that** the pleated bellows (3) is made of a metal.

4. Pressure fluid accumulator as claimed in claim 1,
**characterized in that** the pleated bellows (3) accommodates a supply connection (8) which opens into the one chamber (2) enclosed by the pleated bellows (3), preferably through the inner body (7) which characterizes the accumulating behavior.

5. Pressure fluid accumulator as claimed in claim 1,
**characterized in that** the pleated bellows (3) with its open end area is attached and sealed between the housing (1) and a closing element (9) configured as a cover.

6. Pressure fluid accumulator as claimed in claim 1,
**characterized in that** the housing (1) is a deepdrawn part.

7. Pressure fluid accumulator as claimed in claim 1,
**characterized in that** the valve element (6) acts as a seat valve which includes a sealing element (10).

8. Pressure fluid accumulator as claimed in any one of the preceding claims 1 to 5,
**characterized in that** the pleated bellows (3) is configured as a bowl in a deepdrawing process, and the peripheral surface of the bowl has been provided with the wave contour of a pleated bellows (3) in a compression molding process.

## Revendications

1. Accumulateur d'agent de pression, notamment pour dispositif de freinage de véhicule automobile à régulation du glissement, comprenant un boîtier (1), comportant un raccord d'agent de pression (5), un élément de valve (6), qui ouvre ou ferme le raccord d'agent de pression (5), et un corps qui est disposé d'une manière mobile dans le boîtier (1) et sépare l'une de l'autre deux chambres (2, 11) situées dans l'accumulateur d'agent de pression et qui est réalisé sous forme d'un sac à souffler en accordéon (3) mobile dans le boîtier (1) et entourant l'une (2) des chambres, la chambre (2) entourée par le sac à soufflet en accordéon (3) étant remplie d'un gaz, **caractérisé en ce qu'**il est prévu, disposé dans le sac à soufflet en accordéon (3), un corps intérieur (7), de préférence en matière plastique, au moyen du dimensionnement duquel la caractéristique d'acceptation de pression de l'accumulateur d'agent de pression est déterminée.

2. Accumulateur d'agent de pression suivant la revendication 1, **caractérisé en ce qu'**un élément à comportement de ressort (4), qui porte un élément de valve (6) faisant face au raccord d'agent de pression (5), est fixé sur la surface frontale du sac à soufflet en accordéon (3).

3. Accumulateur d'agent de pression suivant la revendication 1 ou 2, **caractérisé en ce que** le sac à soufflet en accordéon (3) est en métal.

4. Accumulateur d'agent de pression suivant la revendication 1, **caractérisé en ce que** le sac à soufflet en accordéon (3) loge un raccord de remplissage (8) qui débouche, de préférence en traversant le corps intérieur (7) caractérisant le comportement d'accumulateur, dans la chambre (2) entourée par le sac à soufflet en accordéon (3).

5. Accumulateur d'agent de pression suivant la revendication 1, **caractérisé en ce que**, par sa zone d'extrémité ouverte, le sac à soufflet en accordéon (3) est fixé, ainsi que son étanchéité assurée, entre le boîtier (1) et un élément de fermeture (9) réalisé sous forme de couvercle.

6. Accumulateur d'agent de pression suivant la revendication 1, **caractérisé en ce que** le boîtier (1) est réalisé sous forme d'une pièce emboutie.

7. Accumulateur d'agent de pression suivant la revendication 1, **caractérisé en ce que** l'élément de valve (6) fonctionne en tant que valve à levée qui est pourvue d'un élément d'étanchéité (10).

8. Accumulateur d'agent de pression suivant l'une des revendications précédentes 1 à 5, **caractérisé en ce que** le sac à soufflet en accordéon (3) est agencé, au moyen d'un procédé d'emboutissage, en forme de cuvette dont la surface périphérique présente, de préférence par moulage par compression, le contour ondulé d'un sac à soufflet en accordéon (3) .
